# EUROPEAN PATENT APPLICATION

(11) **EP 2 228 924 A2**
(43) Date of publication of application: **15.09.2010**
(21) Application number: 10002388.6
(22) Date of filing: 08.03.2010
(51) Int. Cl.: H04H 60/27, B60R 16/00

(54) **Vehicular digital audio recorder user interface**

(30) Priority: 09.03.2009 US 400647
(71) Applicant: Harman International Industries, Incorporated, Northridge, CA 91329 (US)
(72) Inventor: Eckhardt, Adam, Flat Rock, MI 48134 (US); Furge, Kenneth C., Howell, MI 48855 (US)
(74) Representative: Bertsch, Florian Oliver

(57) **Abstract**

The present invention relates to the use of a recorder (114) that is part of a vehicle entertainment system (VES) (102) for recording audio programming and accessing recorded audio programming, where external controls (124) for the recorder (114) may be located on the steering wheel (402) of the vehicle, allowing a driver to safely configure the VES (102) for recording audio programming and accessing the recorded audio programming.

## Description

### 1. Field of the Invention.

This invention relates, in general, to vehicular audio systems and, in particular, to the control of a vehicular audio recorder.

### 2. Related Art.

Audio systems in vehicles have progressed well beyond AM/FM compact disk players. Presently vehicle audio systems are more like home entertainment centers with satellite receivers and compact disc (CD)/digital video disc (DVD) players. It is not uncommon to find audio, video, and satellite systems combined in a single vehicle entertainment system (VES). But, as technology progresses, it is also not uncommon to find individual components that are grouped together to make a VES.

As the vehicle audio systems have progressed from simple audio devices to VESs, audio subscription services, such as XM SATELLITE RADIO™, have become increasing popular and often temporary subscriptions are offered when a new vehicle is purchased. The scheduled programming of audio subscription services along with the scheduling of traditional audio programming allows users to develop loyalty to different programs. This loyalty creates a need to "time shift" those audio programs.

Current approaches to time shifting audio programs are typically limited to recording the audio programming on devices that are part of a fixed home entertainment center. If recordings are to be made in a vehicle, the user is limited to portable recording devices, such as MP3 players with recorders or digital/audio recorders. However, both of these approaches are less than desirable because of the technological limitations.

If a home entertainment system is used to record audio programming, it may be limited to "over the air" programming, because the satellite radio receiver is built into many new cars and not portable. Another problem exists if a handheld recorder is used to record programming, because typically handheld devices do not have timers that turn on and off the recorder at specified times. The inability to program a device to record the programming from the vehicular entertainment system limits the recording to when a user is in the vehicle.

A further limitation of portable recorders is that their microphones are not typically optimized for a vehicle sound environment, which is subject to road and background noise. Yet another limitation of using a portable recording device in a vehicle is that the controls of portable recording devices are not designed for use while operating a vehicle and may increase risk of accidents if used by a driver. In addition to the limitations already explained, the vehicle must be turned on to at least an "accessory" setting to use the radio which may drain the battery.

Thus, there is a need for providing an approach to safely record programming from a VES while the vehicle is being operated or parked.

### SUMMARY

According to one implementation, an approach for externally controlling a recorder that is part of a VES is disclosed. External controls may be located on the steering wheel of the vehicle and allow a driver to select previous recorded programming or set up the recorder for recording audio programming in the future. By locating the controls for a recorder that is part of a VES on the steering wheel, a driver is able to use the recorder and configure the VES without having to take their hands off the steering wheel. The use of the external controls located upon the steering wheel results in increased safety and easier use of the recorder.

Other devices, apparatus, systems, methods, features and advantages of the invention will be or will become apparent to one with skill in the art upon examination of the following figures and detailed description. It is intended that all such additional systems, methods, features and advantages be included within this description, be within the scope of the invention, and be protected by the accompanying claims.

### BRIEF DESCRIPTION OF THE FIGURES

The invention may be better understood by referring to the following figures. The components in the figures are not necessarily to scale, emphasis instead being placed upon illustrating the principles of the invention. In the figures, like reference numerals designate corresponding parts throughout the different views.

FIG. 1 shows a block diagram of a vehicle entertainment system (VES) in accordance with an example implementation of the invention.

FIG. 2 shows a block diagram of the recorder of FIG. 1 in accordance with an example implementation of the invention.

FIG. 3 shows an example diagram of the controls of FIG. 1 in accordance with an implementation of the invention.

FIG. 4 shows an example diagram of the steering wheel controls of FIG. 1 in accordance with and example implementation of the invention.

FIG. 5 shows a flow diagram of a procedure for controlling the digital recorder of FIG. 1 from the steering wheel of FIG. 4 in accordance with an example implementation of the invention.

### DETAILED DESCRIPTION

In the following detailed description of the examples of various implementations, it will be understood that any direct connection or coupling between functional blocks, devices, components or other physical or functional units shown in the drawings or description in this application could also be implemented by an indirect connection or coupling. It will also be understood that the features of the various implementations described in this application may be combined with each other, unless specifically noted otherwise.

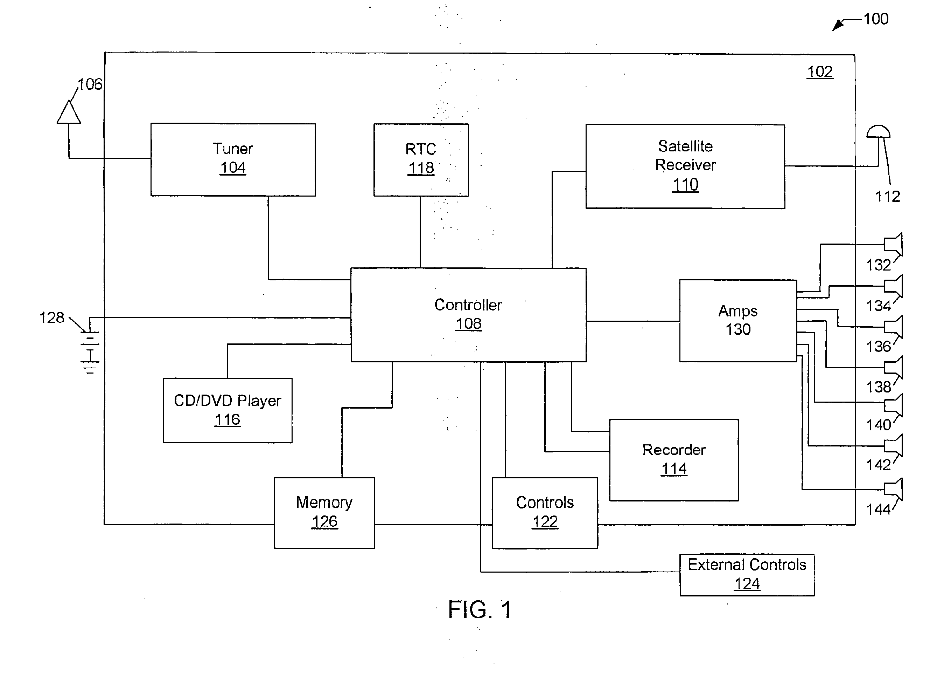

A vehicle entertainment system (VES) with a recorder may be configured to record audio programs by using controls located on the VES or external controls located on the steering wheel of a vehicle. In FIG. 1, a block diagram 100 of a VES 102 in accordance with an example implementation of the invention is depicted. The VES 102 may have a tuner 104 coupled to an AM/FM antenna 106. The tuner 104 may be one or more actual tuners with each tuner being coupled to the AM/FM antenna 106. The tuner 104 may also be coupled to a controller and/or digital signal processor (DSP) 108. A satellite receiver 110 may also be connected to the DSP 108 and a satellite antenna 112. A recorder 114 may be a component of the VES 102 and may have control and data lines or busses that connect to DSP 108. A compact disc (CD) and/or digital video disc (DVD) player 116 may also be part of the VES 102 and coupled to the DSP 108. Further, a real time clock (RTC) 118 may provide the VES 102 with time indications. The RTC 118 may also be coupled to the DSP 108 and the satellite receiver 110. Controls for configuring and using the VES 102 may be located with the VES 102, such as controls 122 or external to the VES 102, such as external controls 124.

The VES 102 may also have a memory 126 and a power supply or power source 128. The memory 126 may include internal memory, removable memory, or a combination of internal and removable memory. Amplifiers may also be present (shown as amps 130) where each amplifier in the VES 102 is associated with a speaker located within the vehicle, such as right front (RF) speaker 132, left front (LF) speaker 134, center speaker 136, left side speaker 138, right side speaker 140, right back speaker 142, and left back speaker 144. The VES 102 is only an example implementation provided to show a high-level view of the types of components that may be included in a VES. In other implementations, the different devices may be located in a vehicle as one or more individual devices that are connected externally to make a VES. Further, the connection of the different devices of VES 102 is shown as lines in FIG. 1. The lines may be control lines, audio channels, or electrical buses that may carry data, control, and/or audio signals.

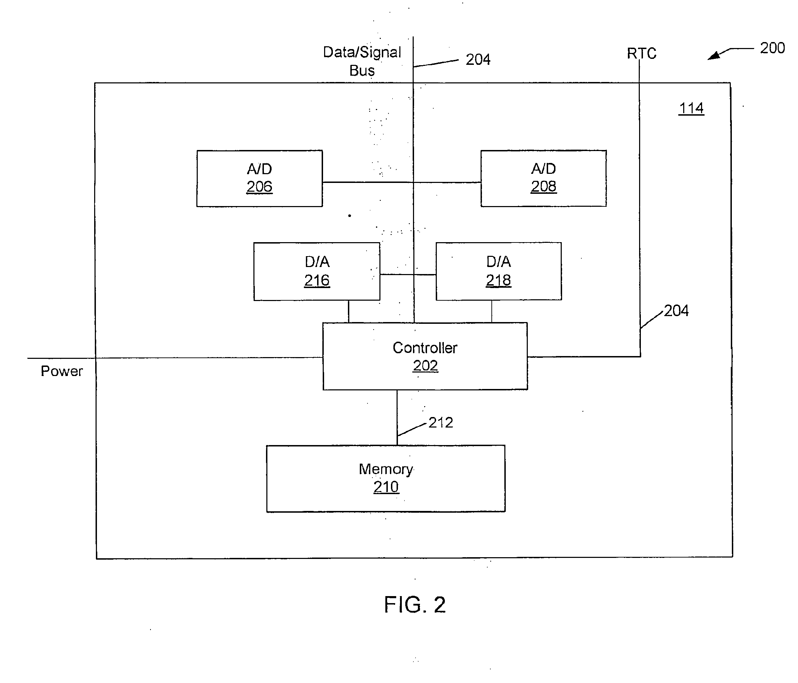

Turning to FIG. 2, a block diagram 200 of the recorder 114 of FIG. 1 in accordance with an example implementation of the invention is depicted. The recorder 114 may have a controller 202 that is coupled to a data/signal bus 204 for communication with DSP 108 of FIG. 1 and for receiving and transmitting audio signals. Analog audio signals may be received by analog-to-digital (A/D) converters 206 and 208 and converted to digital data. Typically an A/D converter may be associated with each audio channel (such as left and right channels) of the VES 102.

The controller 202 receives signaling or control information from the DSP 108 and configures the A/D converters 206 and 208 to convert the audio channel data from analog to digital data that may then be stored in a memory 210. The controller 202 may communicate with the memory via a memory data bus 212. The controller 202 may also receive time data from the RTC over a clock line 214. In other implementations, the time data may be transferred via bus 204 or a timing bus. The controller may also receive power from power source 128, FIG. 1.

When a driver or user attempts to access recordings, the controller 202 receives such request from the DSP 108 and accesses the memory 210. An example of memory 210 is dynamic random access memory (DRAM), but other types of random access memory (RAM) may be used. The controller 202 may also configure the digital-to-analog (D/A) converters 216 and 218 associated with the different audio channels to convert the digital audio signals back to analog audio signals. The audio controller 202 may also configure the bus 204 for transmitting the converted analog audio signals back to the DSP 108 for further processing. In other implementations, the memory may actually be external to the recorder 114, such as memory 126. Memory 126, may be, for example, DRAM, RAM, or even be removable memory, such as SD, micro SD, MEMORY STICK, USB memory, or similar removable memory. Also, in other implementations, the audio signals may be converted to digital data prior to being sent to the recorder 114.

An advantage of recorder 114 over using a personal digital recorder is that no background noise is introduced into the recording. The audio programming signals are contained within the VES 102 and background and road noise do not affect the recording. In the current example implementation, recorder 114 has been described as a digital recorder with A/D and D/A converters, but in other implementations other types of recorders may be used (such as CD/DVD writers or tape recorders).

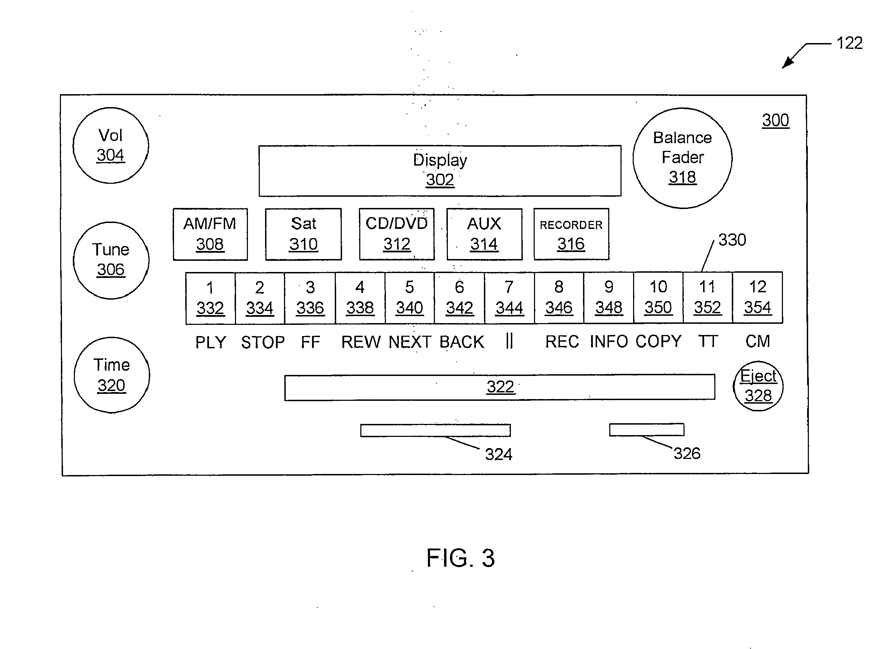

In FIG. 3, an example diagram 300 of the controls 122 of FIG. 1 in accordance with an implementation of the invention is shown. The controls may be placed on a panel 300 with a combination of buttons, displays, and slots, or in other implementations may be formed with a touch screen and slots. The panel 300 may have a display 302, volume (Vol) knob 304, tuning (Tune) knob 306, buttons for selecting; the tuner and AM/FM radio signals 308, satellite radio (Sat) 310, CD/DVD player (CD/DVD) 312, an auxiliary input (Aux) 314, and a recorder (Rec) 316. A balance/fader knob 318 enables adjustment of the sound field within a vehicle, and a time knob 320 may be used for adjusting or setting time data.

A slot 322 may be present and adapted for receiving a CD or DVD. A memory slot 324 may be available for accepting removable memory, such as SD memory, compact flash memory, and MEMORY STICKS^{™}. Similarly a universal serial bus (USB) interface slot 326 may be present for accepting memory or connecting the VES to a computer. In other implementations, the panel may have inputs for connoting an external microphone or other audio sources, and a headphone jack for connecting headphones to the VES 102.

A button may be configured to eject a CD or DVD disk, such as eject button 328. Additional buttons 330 may be employed for preselecting radio stations and be reused or remapped for the different components that make up the VES. For example, the "1" button 332 may be used for play (PLY) 320 with the CD/DVD player or recorder. The "2" button 334 may be used for "Stop", the "3" button 336 may be used for fast forward (FF), the "4" button 338 may be used for rewind (Rew), the "5" button 340 may be used for next track (Next), the "6" button 342 may be used for previous track (Back), the "7" button 344 may be used to pause playing (∥), the "8" button 346 may be used to record (Rec), the "9" button 348 may be used for information about what is being played (Info), the "10" button 350 may be used to copy files (Copy) from an internal memory to a removable memory, the "11" button 352 may be used to switch tuners or otherwise toggle the tuner (TT) , and the "12" button 354 may be used to cycle through wavebands (CM).

The select tuner or toggle tuner (TT) button 352 enables a driver or user of the VES 102 to have two different stations tuned at the same time. The driver or user is then able to switch between each tuner and its respective programming. This is desirable if, for example, the recorder 114 is recording audio programming from one tuner and the driver desires to switch programming to listen to weather or traffic updates.

In other implementations, the TT button 352 may be implemented to automatically start the recorder 114 recording audio programming from an active first tuner when a second tuner is selected. When the TT button 352 is pressed again, the mode of the recorder may be changed to a "record and play" mode. In the "record and play mode," the recorder 114 plays the recorded audio programming from the recorder 114 while still recording from the first tuner. With the "record and play" mode users of the VES 102 is able to pause, start, and stop an audio program while they are listening and restart it where they left off.

The VES 102 is accessed typically from controls 122. The controls 122 allow the user to select which of the components of the VES 102 to be active and to make adjustments to the audio signals generated from speakers 132-144. Further, a user may be able to load data files such as MP3 audio files via the USB slot 326, removable memory slot 324, or even a CD./DVD into the VES 102. In other implementations, digital audio files may be written to USB devices, external memory, or CD/DVDs. The writing of CD/DVDs would require a CD or DVD player that also had the capability to write data.

Data may be transferred by entering a transfer mode when the copy button 350 is selected and the VES 102 has the recorder selected. The specific data being transferred may be selected using the tune knob 306 to scroll through the recording files. When the desired file is displayed on display 302, the knob to actually select the file may be pressed. The user is then able to scroll and select the output location for the file (CD/DVD writer, external memory, or USB slot).

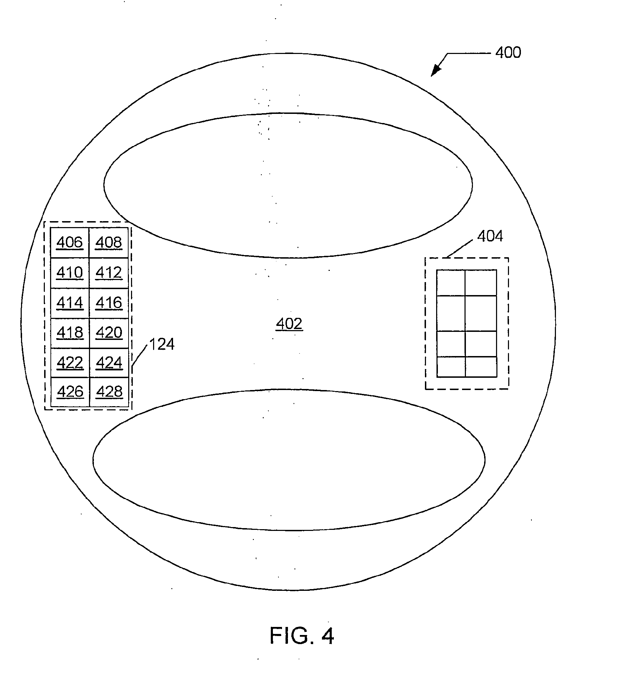

In FIG. 4, a diagram 400 of an example implementation of a vehicle steering wheel 402 having the external controls 124 of FIG. 1 in accordance with an implementation of the invention is depicted. The steering wheel 402 may have a set of controls 404 for configuring and adjusting a vehicle's cruise control and basic VES controls (volume up, volume down, seek, and mute). An addition set of external controls 124 for the VES 102 may be located on the steering wheel 402. Examples of such controls include a pause button 406, play button 408, fast forward button 410, rewind button 412, skip forward button 414, skip backward button 416, cycle mode button 418, toggle tuner button 420, record button 422, stop button 424, scroll up button 426, and scroll down button 428. In other implementations, the scroll up buttons may be other scrolling devices, such as, for example, a touch pad, a scroll wheel or a stick.

The external controls 124 may be connected to the VES with one or more cables that may function as a communication bus. In other implementations, each button or control that makes up the external controls 124 may have a respective wire for transferring a signal from the button or control to the VES 102. In yet another implementation, the external controls 124 may communicate with the VES 102 wirelessly via a communication approach, such as BLUETOOTH^{™}.

By locating the external controls 124 on the steering wheel 402, a driver of the vehicle does not have to remove their hands from the steering wheel in order to use the recorder 114 of FIG. 1. The driver is able to scroll through recordings using the scroll buttons 424 and 426 and select a recording with the play button 408. Portions of the recordings may be skipped by selecting the skip forward button 414 and skip backward button 416. When a component of the VES 102 is being used (for example, a tuner, satellite receiver, or CD player), the driver of the vehicle may record the audio by selecting the record button 422.

The driver of the vehicle may also configure the recorder to record a program at a predetermined time in the future by using the external controls 124. The record button 422 may be depressed and held for a predetermined period (e.g. three seconds) to enter a recorder setup mode. In the recorder setup mode, the driver sets the VES 102 as if the desired program were playing and uses the scroll buttons 424 and 426 to select the time for the recording to start and the duration of the recording. Once configured, the driver may once again press the record button 422 and the recording setup, start time, and duration of the recording will be saved in memory 210. The DSP 108 configures the VES 102 and starts the recording when the RTC 118 8 reaches the start time for the recording.

In some implementations, the vehicle may be turned off and the VES 102 may still turn on and record the program without powering the speakers 132-144 in order to reduce the drain on the power supply 128. The DSP 108 and RTC 118 remain active in a low power state during the period where the vehicle is turned off and a recording is scheduled. In order to further reduce the drain on a power supply 128, the VES 102 may be completely powered off, except for the RTC 118, if no recordings are scheduled.

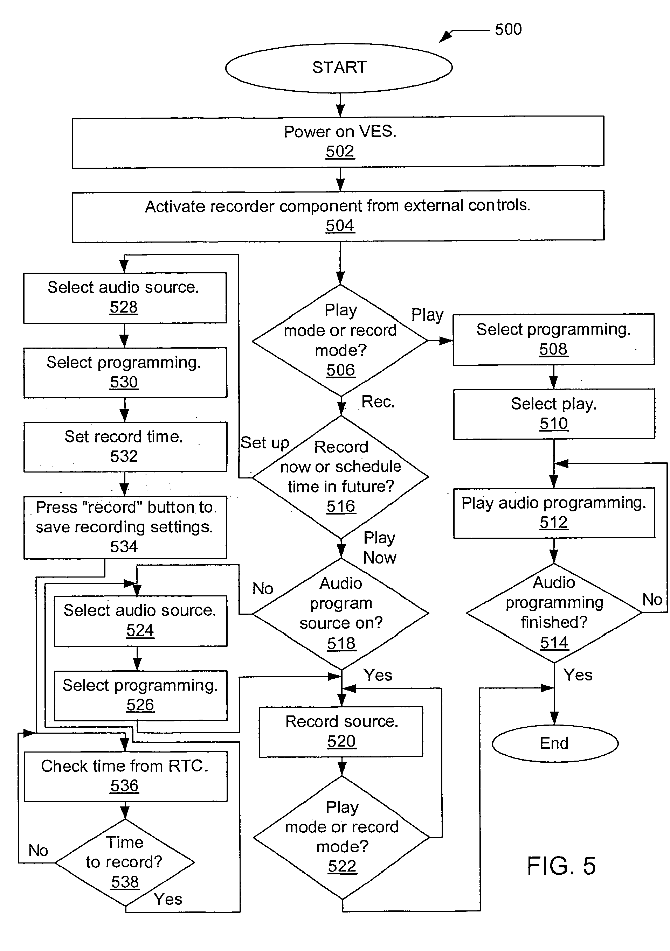

Turning to FIG. 5, a flow diagram 500 for controlling the digital recorder 114 of FIG. 1 from the steering wheel 402 of FIG. 4 in accordance with an example implementation is shown. The VES 102 is powered on 502 and a driver may activate the recorder 114 via the external controls 124 located on the steering wheel 402 in step 504. The mode of the recorder 114 may then be selected 506 by pressing the play button or the record button (both of which may be located on steering wheel 402).

If the play mode is selected for the recorder 114, then the driver may select the recorded programming 508 by using the scroll buttons 426 and 428. When the desired recorded programming is identified, either by being displayed or being highlighted in display 302, the driver then presses the "play" button to play the selected audio programming 510. The recorder 114 may then access the audio programming in memory 210 or external memory 126 and play the audio programming 512. The audio programming is played until the end of the recording is reached or until the stop button 424 is pressed 514. If the vehicle is turned off and the audio programming is playing, then it is stopped or otherwise ended. In other implementations, the audio programming will be paused until the vehicle is restarted and the playing of the audio is able to continue.

If the record mode is selected 506, then the driver may be prompted to record the current audio program being played by the VES 102 or schedule a recording for a future time 516. If recording is to occur immediately 516, then the audio source must be turned on 518. If the audio source is not turned on or otherwise unavailable 518, then the driver may be prompted to select an audio source 524 (such as selecting the tuner 104) and associated programming 526 (such as selecting a radio station). Once a programming source has been selected, then the recorder 114 is directed by the DSP 108 to record the audio programming from the programming source 520. Recording continues until it is stopped 522 or memory is filled up. In other implementations, the memory may be configured as a circular buffer where the oldest part of the recording is deleted to make room for the current part of the recording.

If the driver decides to set up the recorder to record audio programming 516 at a predetermined time, the record button located on the steering wheel 402 may be pressed for a predetermined period of time (e.g., three seconds) to indicate a recording is to be scheduled. The driver may then be prompted to select an audio source from which the recording is going to be made 528. The driver then selects the programming (i.e. the channel or station to be recorded) to be recorded 530. The driver may then set the time at which the recording is to start 532 using the scroll buttons 426 and 428 located on the steering wheel 402 and the duration of the recording. The driver then presses the record button again to save the recording settings 534 in memory 126.

Once the recording settings have been saved, the DSP 108 monitors the RTC 118 until the time set for the recording to start is reached 538. Once the DSP 198 determines that the time to start the recording has occurred, the DSP 108 selects the audio source 524 and the audio programming 526. The DSP 108 then instructs the recorder 114 to record the audio programming from the audio source 520 for the previously entered time duration or period.

It will be understood, and is appreciated by persons skilled in the art, that one or more processes, sub-processes, or process steps described in connection with FIG. 5 may be performed by a combination of hardware and software. The software may reside in software memory internal or external to the digital signal processor 108 or other controller, in a suitable electronic processing component or system such as one or more of the functional components or modules depicted in FIGS. 1-3. The software in memory may include an ordered listing of executable instructions for implementing logical functions (that is, "logic" that may be implemented either in digital form such as digital circuitry or source code or in analog form such as analog circuitry), and may selectively be embodied in any tangible computer-readable medium for use by or in connection with an instruction execution system, apparatus, or device, such as a computer-based system, processor-containing system, or other system that may selectively fetch the instructions from the instruction execution system, apparatus, or device and execute the instructions. In the context of this disclosure, a "computer-readable medium" is any means that may contain, store, communicate, propagate, or transport the program for use by or in connection with the instruction execution system, apparatus, or device. The computer readable medium may selectively be, for example, but is not limited to, an electronic, magnetic, optical, electromagnetic, infrared, or semiconductor system, apparatus, device, or medium. More specific examples, but nonetheless a non-exhaustive list, of computer-readable media would include the following: a portable computer diskette (magnetic), a RAM (electronic), a read-only memory "ROM" (electronic), an erasable programmable read-only memory (EPROM or Flash memory) (electronic), and a portable compact disc read-only memory "CDROM" (optical) or similar discs (e.g., DVDs and Rewritable CDs). Note that the computer-readable medium may even be paper or another suitable medium upon which the program is printed, as the program can be electronically captured, via, for instance, optical scanning or reading of the paper or other medium, then compiled, interpreted or otherwise processed in a suitable manner if necessary, and then stored in the memory.

The foregoing description of implementations has been presented for purposes of illustration and description. It is not exhaustive and does not limit the claimed inventions to the precise form disclosed. Modifications and variations are possible in light of the above description or may be acquired from practicing the invention. The claims and their equivalents define the scope of the invention.

## Claims

1. A method for controlling a recorder that is part a vehicle entertainment system (VES), comprising:
selecting an audio source that is a component of the VES;
selecting an audio program;
activating the recorder from an external control that communicates with the VES; and
recording the audio program with the recorder.

2. The method of claim 1, where activating the recorder from the external control, includes selecting a record button located on a vehicle steering wheel.

3. The method of claim 2, where activating the recorder from the external control, further includes, activating the recorder at a previously set time in response to a real time clock time being the same as the previously set time.

4. The method of claim 3, where activating the recorder at the previously set time, further includes setting a time for the recorder to activate with a scrolling device located on the vehicle steering wheel.

5. The method of claim 4 wherein the scrolling device is one or more scroll buttons.

6. The method according to any of the preceding claims, where selecting the audio source further includes selecting a tuner.

7. The method of claim 6, where selecting a tuner, further includes selecting a tuner from a plurality of tuners.

8. The method of claim 7, where selecting the tuner from the plurality of tuners further includes activating a select-tuner button located on the vehicle steering wheel.

9. A vehicle entertainment system (VES), comprising:
a first tuner;
a recorder;
a plurality of external controls;
a controller coupled to the first tuner, the recorder, and the external controls, where the recorder is placed in a record mode to record audio programming from the first tuner in response to at least one external control from the plurality of external controls being activated.

10. The VES of claim 9, where the plurality of external controls are located on a vehicle steering wheel.

11. The VES of claim 9 or 10, where the at least one external control is a button.

12. The VES according to any of claims 9-11, where the recorder is placed in the record mode to record the audio programming at a predetermined time in the future.

13. The VES of claim 12, where the audio programming is recorded when the controller determines that the predetermined time is indicated by a real time clock (RTC).

14. The VES of claim 12 or 13, where the recording of audio programming, includes,
a second tuner being selected to provide the audio programming at the predetermined time.

15. The VES of claim 14, where the second tuner is selected by a select-tuner button located in the plurality of external controls located on the vehicle steering wheel.

16. A computer-readable media with instructions, that when executed by a controller performs a method for controlling a recorder that is part a vehicle entertainment system (VES), the method comprising:
selecting an audio source that is a component of the VES;
selecting an audio program;
activating the recorder from an external control that communicates with the VES; and
recording the audio program with the recorder.

17. The computer-readable media of claim 16, where activating the recorder from the external control, includes selecting a record button located on a vehicle steering wheel.

18. The computer-readable media of claim 17, where activating the recorder from the external control, further includes, activating the recorder at a previously set time in response to a real time clock (RTC) time being the same as the previously set time.

19. The computer-readable media of claim 18, where activating the recorder at the previously set time, further includes setting a time for the recorder to activate with a scroll button located on the vehicle steering wheel.

20. The computer readable media according to any of claims 16-19, where selecting the audio source further includes selecting a tuner.

21. The computer-readable media of claim 20, where selecting a tuner, further includes selecting a tuner from a plurality of tuners.

22. The computer-readable media of claim 21, where selecting the tuner from the plurality of tuners further includes activating a select-tuner button located on the vehicle steering wheel.
